# EUROPÄISCHE PATENTSCHRIFT

(11) **EP 2 189 691 B1**
(45) Veröffentlichungstag und Bekanntmachung des Hinweises auf die Patenterteilung: **10.10.2012**
(21) Anmeldenummer: 09013983.3
(22) Anmeldetag: 06.11.2009
(51) Int. Cl.: F16K 3/12

(54) **Absperrarmatur für ein Rohrleitungssystem**
Shut-off valve for a piping system
Armature de verrouillage pour un système de conduite

(30) Priorität: 25.11.2008 DE 102008058932
(43) Veröffentlichungstag der Anmeldung: 26.05.2010
(73) Patentinhaber: AREVA NP GmbH, 91052 Erlangen (DE)
(72) Erfinder: Kradepohl, Paul, 63571 Gelnhausen (DE)
(74) Vertreter: Tergau & Walkenhorst

(56) Entgegenhaltungen:
- DE-A1- 1 675 414
- GB-A- 925 949
- US-A- 2 984 449
- US-A- 3 575 380
- US-A- 4 373 242
- US-A- 5 004 210

## Beschreibung

Die Erfindung bezieht sich auf eine Absperrarmatur für ein Rohrleitungssystem mit einem beidseits mit Rohranschlüssen versehenen Schiebergehäuse und mit einem Absperrelement, das senkrecht zur Rohrleitungsachse in eine Schließstellung einschiebbar ist, wobei das Absperrelement ein Stellglied und eine Anzahl von elastischen Dichtelementen umfasst, und wobei die Rohranschlüsse mit Sitzflächen für das Absperrelement versehen sind.

Die DE 33 41 123 offenbart einen Absperrschieber für ein Rohrleitungssystem mit einer Anzahl von Schieberplatten und Dichtflächen sowie einem axial verschiebbaren Ventilkegel, der mit Dichtflächen versehen und durch Federn belastet ist, wobei die Schieberplatten Bohrungen aufweisen und wobei der Ventilkegel durch den Druck des in der Rohrleitung anstehenden Mediums beaufschlagbar ist.

In der EP 0 355 301 ist ein Absperrschieber beschrieben, der ein beidseits mit Rohranschlüssen versehenes Gehäuse mit einer Haube und einen der Haube zugeordneten Deckel mit einer Schraubspindellagerung umfasst, wobei der Absperrschieber ein Auswechseln der Spindel und der Spindellagerung auch im Betrieb des Rohrleitungssystems ermöglicht, indem in der Haube ein Sitz mit Dichtmitteln für einen Verschlusskörper ausgebildet ist.

Bei einem aus der DE 2 806 737 bekannten Absperrschieber ist das Gehäuseinnere über Spalten zwischen den Schieberplatten und einer Spindel mit einem von dem Ventilkegel verschlossenen Druckraum verbunden. Überschreitet der Druck im Gehäuseinnenraum den an einer Schieberplatte anstehenden Betriebsdruck, hebt der Ventilkegel von seiner Sitzfläche ab und lässt so viel Medium entweichen, bis der Überdruck abgebaut ist.

Dokument US 5,004,210 offenbart eine Abspekkarmatum nach dem Oberbegriff des Anspruchs 1.

In hochenergetischen Rohrleitungssystemen werden seit jeher Schieber als Absperrelemente zum Absperren von Fluidströmen eingesetzt. Bei dieser Art von Absperramatur wird in einem um die beiden zur Absperrung mit je einer Sitzfläche versehenen Rohrleitungsenden herum angeordneten Gehäuse ein Absperrelement zum Schließen senkrecht zur Rohrleitungsachse so zwischen die für das Absperrelement vorgesehenen Sitze geschoben, dass der Fluidstrom unterbrochen und das Absperrelement stromabwärts gegen den Sitz gedrückt und dadurch auch eine Abdichtung erzielt wird.

Hierbei unterscheidet man je nach Ausführung in einteilige Keilscheiber sowie zweiteilige Keil- oder Parallelplattenschieber. Diese Schieberarten unterscheiden sich im Wesentlichen nur in der Art, wie während oder nach der zur Rohrachse senkrechten Bewegung des Absperrelementes zur Absperrung seine Bewegung oder diejenige der von ihm gehaltenen Platten in Richtung der Rohrleitungsachse zur Abdichtung auf den Sitzen erwirkt wird.

Allen genannten Arten gemeinsam ist, dass die Abdichtung im Sitz mit plattenförmigen Elementen vorgenommen wird, die beim Schließen zu einer vom Differenzdruck und vom Rohrleitungsdurchmesser abhängigen Belastung der Sitze und ihrer Dichtflächen führt.

Dabei kommt es durch die unter Last erzwungene Gleitbewegung der Dichtelemente in Richtung der Rohrleitungsachse je nach Funktionsprinzip der unterschiedlichen Schieberarten zu ungleichförmigen Bewegungen und in deren Folge möglicherweise zu örtlichen Flächenpressungsüberhöhungen im Sitz und in der Regel zu Beschädigungen auf den so belasteten Sitzbereichen, was letztendlich mit einem Verlust der Sitzdichtheit einhergeht.

Durch die unter Last erzwungene gleitende Axialbewegung des Stellgliedes oder seiner Dichtplatten kommt es zu Zwängungen und Verschleiß an den Gleitflächen und rückwirkend zu Querkräften auf den Spindeltrieb, die sich besonders bei herkömmlichen Trapezgewindespindeln in lastabhängigen Faktoren für die Umwandlung von Drehmoment in Spindelkraft (Rate of Loading Effect) auswirken.

Der Erfindung liegt daher die Aufgabe zugrunde, eine Absperrarmatur der genannten Art anzugeben, deren konstruktive Elemente derart ausgeführt sind, dass die erzielbare Sitzdichtheit auch bei und nach der Absperrung von hochenergetischen Fluidströmen erhalten bleibt, so dass die Nachteile der bisherigen Lösungen vermieden werden können.

Diese Aufgabe wird erfindungsgemäß dadurch gelöst, dass der in der Schließstellung erzielte Abstand zwischen dem Stellglied und den Sitzflächen derart ausgelegt ist, dass eine Verformung, die die Grenzen der Elastizität der Dichtelemente überschreitet, ausgeschlossen ist.

Vorteilhafte Ausgestaltungen der Erfindung sind Gegenstand der Unteransprüche und gegen im übrigen aus der detaillierten Figurenbeschreibung hervor.

Die Erfindung geht von der Überlegung aus, dass eine der Hauptursachen für Undichtigkeiten herkömmlicher Absperrschieber darauf basiert, dass die Sitzfläche und die Sitzabdichtung des Absperrelementes die gesamte Last der durch das strömende Medium und durch den Differenzdruck auf den Absperrschieber wirkenden Kräfte aufnehmen und dadurch lokal überlastet und beschädigt werden. Die erfindungsgemäß verwirklichte funktionale Trennung der für das Absperren und für das Abdichten vorgesehenen Komponenten kann hingegen eine beständige Abdichtung ohne die beim Absperren unter Zwang erzeugte Abnutzung der Dichtungsflächen bewirken.

Mit anderen Worten: Durch die konstruktive Trennung der beiden Funktionen "Absperren" und "Dichten", die von unabhängig voneinander wirkendenden, funktionell entkoppelten Konstruktionselementen übernommen werden, entfällt die von Absperrschiebern konventioneller Bauart bekannte Abstützung des Stellgliedes auf den Sitzflächen des Rohrleitungssystems, die dort je nach vorliegendem Differenzdruck zu sehr hohen Flächenlasten auf die Sitzflächen und auf die zwischen den Sitzflächen und dem Stellglied angeordneten Dichtelemente führen kann. Indem dies nunmehr konsequent vermieden ist, ist bei geeigneter Dimensionierung der Dichtelemente erreichbar, dass diese nur noch im Elastizitätsbereich, aber nicht darüber hinaus belastet werden.

Die mit der Erfindung erzielten Vorteile bestehen insbesondere darin, dass durch die druckentlastete Sitzabdichtung im Verschlusszustand und durch das druckentlastete Gleiten der Dichtelemente über die Sitzflächen während der Schließbetätigung die Sitzdichtheit und die Verschleißfestigkeit eines Absperrschiebers auch und gerade bei Betätigung mit medienbedingt anliegendem Differenzdruck wesentlich erhöht wird. Daraus resultiert eine höhere Zuverlässigkeit des Schiebers, etwa bei Absperrung von Bruchausströmung hochenergetischer Systeme, insbesondere bei kerntechnischen Anlagen, und eine geringere Verschleißanfälligkeit mit entsprechend verringertem Wartungs- und Instandhaltungsaufwand.

Zwei verschiedene Ausführungsbeispiele der Erfindung werden nachfolgend anhand von Zeichnungen näher erläutert. Darin zeigen:
- Fig. 1: eine Absperrarmatur mit einem in teilweise geöffneter Stellung befindlichen Absperrelement im Längsschnitt,
- Fig. 2: die Absperrarmatur gemäß Fig.1 in geschlossener Stellung des Absperrelementes, und
- Fig. 3: eine zweite Variante der Absperrarmatur mit einer gegenüber der Variante gemäß Fig.1 und Fig. 2 abgewandelten Dichtkonfiguration, ebenfalls im Längsschnitt.

Gleiche Teile sind in allen Figuren mit denselben Bezugszeichen versehen.

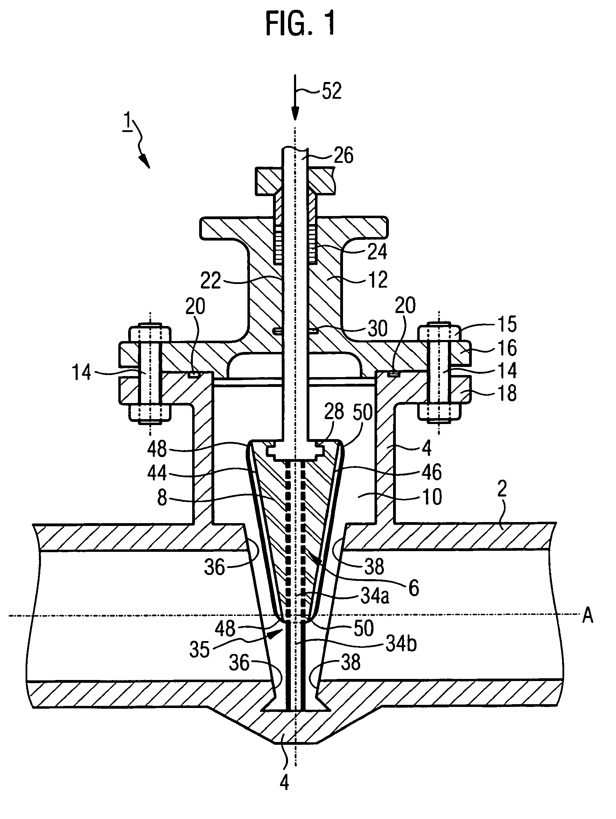

Die Fig. 1 zeigt im Schnitt die Absperrarmatur 1 des Rohrleitungssystems 2 im halb geöffneten Zustand, so dass ein das Rohrleitungssystem 2 durchströmendes, hier nicht dargestelltes Medium durch die vom Absperrelement 6 freigegebene Durchtrittsöffnung der Absperrarmatur 1 hindurch fließen kann. Die Absperrarmatur 1 umfasst im Wesentlichen zwei konstruktive Hauptelemente: das Schiebergehäuse 4, das fest mit dem Rohrleitungssystem 2 verbunden ist, sowie das Absperrelement 6, das im Bereich des Schiebergehäuses 4 beweglich angeordnet ist und im Ausführungsbeispiel ein keilförmiges Stellglied 8 aufweist.

Das Schiebergehäuse 4 ist an seinen Befestigungspunkten oder -flächen fest mit dem Rohrleitungssystem 2 verbunden. Das Schiebergehäuse 4 umfasst den Schieberdom 10 im Inneren des Schiebergehäuses 4, der das Absperrelement 6 im teilweise oder vollständig geöffneten Zustand aufnimmt. Dabei kann ggf. ein Teilstrom des im Rohrleitungssystem 2 geführten Mediums in den Schieberdom 10 eindringen und ihn im Bypass zum Hauptstrom durchfließen. Das Schiebergehäuse 4 ist durch den Gehäusedeckel 12 mittels geeigneter Dichtungs- und Verschlusselemente verschlossen. Beispielsweise kann diese Verschließung durch Stifte oder Schrauben 14 mit geeigneten Halte- oder Sicherungselementen 15 erfolgen, wobei die Stifte oder Schrauben 14 durch Durchbohrungen geführt sind und den Deckelflansch 16 des Gehäusedeckels 12 und den Gehäuseflansch 18 des Schiebergehäuses 4 druckdicht miteinander verbinden. Zur Abdichtung ist eine Deckeldichtung 20 vorgesehen.

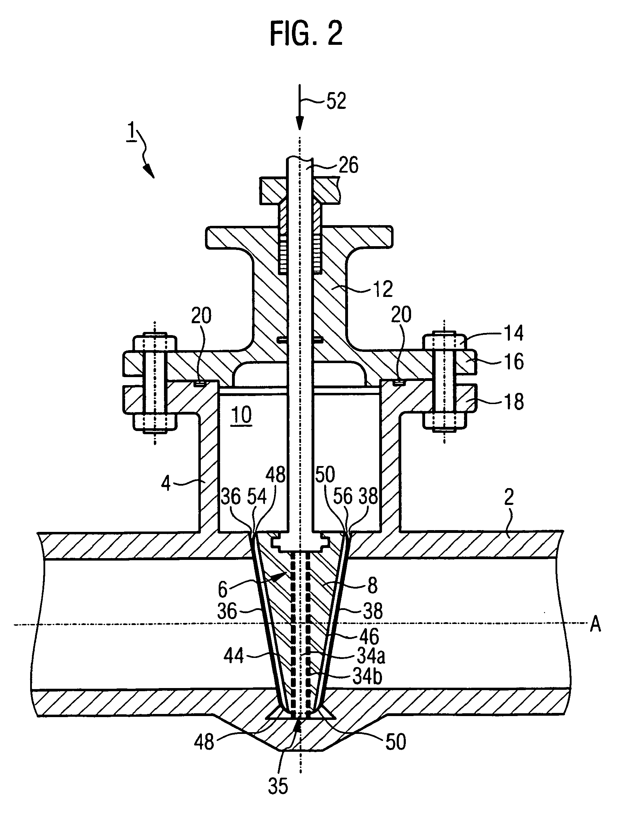

Oberhalb des Gehäusedeckels 12 ist ein Antrieb für die Hubbewegung der Spindel 26 angeordnet, der in der Zeichnung nicht dargestellt ist. Die Anordnung des Spindelantriebes kann außerhalb der druckführenden Umschließung des Armaturengehäuses liegen, welches hierzu von der Hub- bzw. Gewindestange der Spindel 26 durchdrungen und über eine Stopfbuchse 24 abgedichtet wird. Durch die Hubbewegung der Spindel 26 lässt sich das Absperrelement 6 senkrecht zur Rohrleitungsachse A von der in Fig. 1 dargestellten Öffnungsstellung in die in Fig. 2 dargestellte Schließstellung verschieben, in der der Medienfluss durch das Rohrleitungssystem 2 unterbrochen ist. In alternativer Ausgestaltung könnten Eigenmediumantriebe auch innerhalb der druckführenden Umschließung angeordnet sein.

Das Absperrelement 6 umfasst im Wesentlichen das keilförmige Stellglied 8, welches über die fest mit ihm verbundene Hubstange der Spindel 26 senkrecht zur Rohrleitungsachse A von der Öffnungs- in die Verschlussstellung (und zurück) verschiebbar ist. Die dem Stellglied 8 zugewandten Rohrleitungsenden sind entsprechend dessen Keilkontur angeschrägt, bilden also in der Schnittdarstellung gemäß Fig. 1 eine V-förmige Ausnehmung in der hohlzylindrischen Rohrleitung 2.

Die Absperrarmatur 1 ist durch eine Reihe von konstruktiven Maßnahmen für eine besonders hohe Dichtigkeit in der Verschlussstellung bei zugleich geringer Verschleißanfälligkeit bei Betätigung mit Differenzdruck - wenn das Medium auf der einen Seite des Absperrelementes 6 sich auf einem anderen Druckniveau befindet wie das Medium auf der anderen Seite - ausgelegt, die nachfolgend näher beschrieben werden:

Zur Vermeidung von gleitenden Bewegungen des Stellgliedes 8 in Richtung der Rohrleitungsachse A, die beim Öffnen und Schließen des Absperrschiebers durch den am Absperrelement 6 anstehenden Differenzdruck hervorgerufen werden könnten, weist das Stellglied 8 Führungselemente 34a auf, beispielsweise Ausnehmungen oder Nuten, denen als komplementäre Gegenstücke die mit dem Schiebergehäuse 4 verbundenen Führungselemente 34b der Absperrarmatur 1, beispielsweise Leisten oder Stangen, zugeordnet sind. Die vorzugsweise schienenartigen Führungselemente 34a, 34b sind in Form, Anordnung und Gleitflächenausführung so gestaltet, dass einerseits die bei der Betätigung des Absperrschiebers auf das Absperrelement 6 einwirkenden, axial gerichteten (Differenz-) Druckkräfte aufgenommen und in das Schiebergehäuse 4 abgetragen werden können und andererseits die bei der Betätigung des Absperrschiebers auf das Absperrelement 6 einwirkenden Strömungs- und Spindelkräfte nicht zu einer Verkippung des Absperrelementes 6 führen. Damit werden insbesondere lokale Überbeanspruchungen der Führungselemente 34a, 34b und unerwünschte Querkräfte, die auf den Spindelantrieb rückwirken könnten, vermieden bzw. ausgeglichen.

Zu näheren Illustration zeigt die Fig. 2 zeigt das Absperrelement 6 in dem die Rohrleitung 2 verschließenden Zustand. Die Gewindestange der Spindel 26 mit dem mit ihr verbundenen keilförmigen Stellglied 8 ist in der untersten erreichbaren, für das vollständige Absperren notwendigen Position.

In dieser Verschlussstellung ist das Absperrelement 6 gegen eine axiale, d. h. in Richtung der Rohrleitungsachse A gerichtete Kraft, die durch die Druckbeaufschlagung des auf das Absperrelement 6 einwirkenden Mediums und infolge des anstehenden Differenzdrucks verursacht ist, mittels der Führungselemente 34a und 34b gesichert. Diese Sicherung ist so gestaltet, dass insbesondere die der Hubstange der Spindel 26 gegenüberliegende Keilspitze 35 des Stellgliedes 8 gegen eine axiale Verschiebung oder Verkippung fixiert ist. Die Führungselemente 34a und 34b bilden also gewissermaßen ein Gegenlager für das am anderen Ende über die Spindel 26 gelagerte Absperrelement 6.

Die Führungselemente 34a und 34b verhindern vor allem ein übermäßiges Anpressen des Absperrelements 6 gegen die in Richtung der resultierenden Druckkraft gelegenen Stirn- bzw. Sitzflächen 36 oder 38 der Rohrleitungssystems 2. Ohne die Führungselemente 34a und 34b würde sowohl beim Einbringen des Absperrelementes 6 in die Verschlussstellung als auch beim Verbleib in dieser Verschlussstellung eine differenzdruckabhängige Kraft sowohl auf die in Richtung der resultierenden Druckkraft gelegenen Sitzflächen 36 oder 38 als auch auf die auf dieser Seite des Stellglieds 8 angeordneten, sich an die Sitzflächen 36 bzw. 38 anlehnenden Dichtelemente 48 oder 50 wirken. Dies könnte zu einer über die Elastizitätsgrenze hinausgehenden Belastung und Verformung der Dichtelemente 48 und 50 führen und diese irreversibel schädigen.

Durch die Anordnung der Führungselemente 34a und 34b ist somit eine direkte Krafteinleitung und Abstützung des Absperrelementes 6 in die / an den Stirn- bzw. Sitzflächen 36 oder 38 der Rohrleitung 2 vermieden, da die druckbedingt auf das Stellglied 8 einwirkenden, im Wesentlichen axial gerichteten Kräfte über die stabilen Führungselemente 34a, 34b in das Armaturengehäuse abgetragen werden. Verschleiß an den Sitzflächen 36, 38 und an den zugehörigen Dichtelementen 48, 50 tritt nicht auf, da diese nicht mit Stellkräften belastet sind.

Wie bereits erwähnt, sind zur Gewährleistung einer sicheren Abdichtung des Strömungsweges im Verschlusszustand der Absperrarmatur 1 an dem keilförmigen Stellglied 8 beidseits Dichtelemente 48, 50 angebracht. Anstelle der bislang üblichen flächig ausgedehnten Dichtplatten, die auf den Keilflächen 44, 46 des Stellgliedes 8 aufliegen, sind vorliegend auf den Keilflächen 44, 46 befestigte bzw. mit ihnen fest verbundene elastische Dichtringe oder Ringdichtungen 48, 50 vorgesehen, die bezüglich Anordnungsposition und Durchmesser auf die ihnen im Verschlusszustand des Absperrschiebers gegenüberliegenden Rohrleitungs-Sitzringflächen, d. h. auf die ringförmigen Stirn- bzw. Sitzflächen 36, 38 abgestimmt sind.

Durch eine Begrenzung des Hubweges des Absperrelementes 6 in Schließrichtung 52, die beispielsweise durch eine elektronische Überwachung und Steuerung des Spindelantriebs und/oder durch einen geeigneten mechanischen Festanschlag realisiert sein kann, ist sichergestellt, dass im Schließzustand entlang dem gesamten Umfang der Rohrleitung 2 ein Ringspalt 54 bzw. 56 mit einer wohldefinierten Spaltbreite zwischen der jeweiligen Keilfläche 44 bzw. 46 des vergleichsweise harten und unelastischen Stellgliedes 8 und der ihr zugewandten Sitzfläche 36 bzw. 38 der ebenfalls relativ harten und unelastischen Rohrleitung 2 verbleibt. Aufgrund der Führungselemente 34a, 34b, die eine axiale Verschiebung oder Verkippung des Absperrelementes 6 wirkungsvoll unterdrücken, wird die jeweils eingestellte Spaltbreite auch beim Vorliegen vergleichsweise hoher Differenzdrücke im Rohrleitungssystem 2 vergleichsweise genau eingehalten.

Dabei ist die Beschaffenheit und Geometrie der Ringdichtungen 48 und 50, insbesondere deren axiale Ausdehnung und Elastizität, in Relation zu der im Verschlusszustand gegebenen Spaltbreite des jeweiligen Ringspaltes 54 bzw. 56 so gewählt, dass die jeweilige Ringdichtung 48 bzw. 50 im Verschlusszustand des Absperrelementes 6 mit der notwendigen Flächenpressung zur Erzielung einer ausreichenden Dichtigkeit, aber möglichst nicht darüber hinaus, elastisch verformt und zusammengepresst wird. Damit ist zugleich eine unerwünschte Verspannung oder Blockierung des Absperrelementes 6 in der Schließposition ausgeschlossen, die ansonsten durch Wärmedehnung des Armaturengehäuses oder der Spindel 26 infolge von umgebungs- oder medieninduzierten Temperaturtransienten hervorgerufen werden könnte.

Vorzugsweise ist die (Querschnitts-) Geometrie der jeweiligen Ringdichtung 48, 50 dabei durch geeignete Wahl ihres Innen- und Außendurchmessers so ausgeführt, dass sie mit steigendem Differenzdruck in Strömungsrichtung des im Rohrleitungssystem 2 geführten Mediums selbstdichtend wirkt.

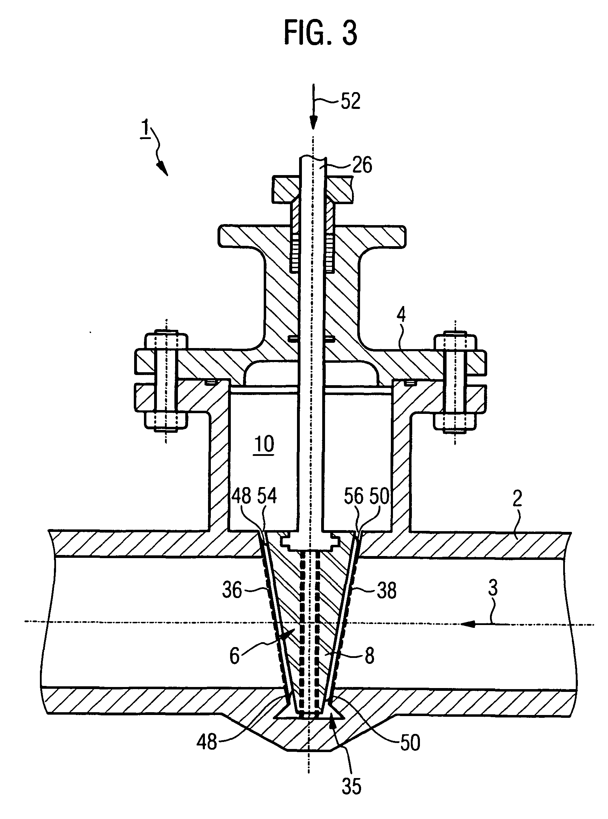

Im Ausführungsbeispiel gemäß Fig. 3 ist für das im Rohrleitungssystem 2 geführte Medium eine bevorzugte Durchflussrichtung 3, hier von rechts nach links strömend, vorgesehen. In daran besonders angepasster Ausgestaltung weist die in Durchflussrichtung 3 gesehen an der stromaufwärtigen Seite des keilförmigen Stellglieds 8 angeordnete elastische Ringdichtung 50 auf der dem Stellglied 8 zugewandten Seite einen größeren Durchmesser auf als auf der dem Stellglied 8 abgewandten, der Sitzfläche 38 zugewandten Seite. Die Ringdichtung 50 wölbt sich im Schnitt betrachtet also vom Stellglied 8 ausgehend nach innen zur Rohrleitungsachse A hin und liegt dort an der ringförmigen Sitzfläche 38 an. Durch diese Ausgestaltung der Ringdichtung 50 ist bei allen Druckverhältnissen innerhalb des Rohrleitungssystems 2 eine zuverlässige Abdichtung erzielbar, da das stromaufwärts im rechten Teil der Rohrleitung 2 vorgehaltene und auf das Stellglied 8 auftreffende Medium die elastische Ringdichtung 50 bei steigendem Mediendruck immer fester gegen die Sitzflächen 38 drückt, wodurch sich die Dichtwirkung gewissermaßen automatisch und besonders bedarfsgerecht erhöht.

Die in Durchflussrichtung 3 des Mediums gesehen auf der stromabwärtigen Seite des Stellgliedes 8 angeordnete elastische Ringdichtung 48 weist hingegen auf der dem Stellglied 8 zugewandten Seite einen kleineren Durchmesser auf als auf der dem Stellglied 8 abgewandten, der Sitzfläche 36 zugewandten Seite, wölbt sich also vom Stellglied 8 ausgehend nach außen von der Rohrleitungsachse A weg. Falls also infolge etwaiger Undichtigkeit der stromaufwärts angeordneten Ringdichtung 50 Medium von der stromaufwärts des Stellgliedes 8 liegenden (rechten) Rohrleitung in den Schieberdom 10 überströmt und dort zu einem Druckaufbau gegenüber der vergleichsweise weniger druckbelasteten stromabwärtigen (linken) Rohrleitung führt, wird die stromabwärtige elastische Ringdichtung 48 mit steigendem Druck im Schieberdom 10 immer stärker gegen die zugehörige Sitzfläche 36 angepresst.

Man kann daher in Bezug auf die Dichtanordnung gemäß Fig. 3 von einer "zweistufigen Dichtungsbarriere" bzw. einer "doppelten Abdichtung" sprechen, durch die bei geschlossenem Absperrschieber 6 eine Leckage von Strömungsmedium aus dem hochenergetischen, unter hohem Mediendruck stehenden Rohrleitungsabschnitt in den niederenergetischen Abschnitt besonders zuverlässig ausgeschlossen ist.

Bei der in Fig.1 und Fig. 2 dargestellten alternativen Ausgestaltung weisen beide Ringdichtungen 48, 50 einen größeren keilseitigen und einen kleineren sitzseitigen Durchmesser auf. Dadurch ist sichergestellt, dass - unabhängig von der vorgesehenen Strömungsrichtung des Mediums im Rohrleitungssystem 2 - ein sich ein bei inkompressiblen Medien (Flüssigkeiten) eventuell aufbauender Überdruck im Schieberdom 10, z. B. durch Erwärmung von im Schieberdom 10 eingeschlossenen Volumina, selbsttätig in das Rohrleitungssystem 2 abbauen kann. Der sich aufbauende Überdruck im Schieberdom 10 wirkt nämlich der elastischen Vorspannung der Ringdichtung 48 bzw. 50 entgegen und hebt diese von ihrem Dichtsitz auf der Sitzfläche 36 bzw. 38 des Rohrleitungssystems 2 derart ab, dass unter Überdruck stehendes Medium aus dem Schieberdom 10 in das Rohrleitungssystem 2 entweichen kann, so dass ein unzulässiger Überdruck im Schieberdom 10 vermieden wird. Zusätzliche Maßnahmen gegen unzulässigen Gehäusedruckaufbau sind daher nicht notwendig.

In beiden Fällen, d. h. sowohl bei der Variante gemäß Fig. 1 und Fig. 2 als auch bei der Variante gemäß Fig. 3, gilt: Für die Ringdichtungen 48 und 50 ist eine Verformung über den Elastizitätsbereich hinaus nicht vorgesehen, da der in der Verschlussstellung erzielte Abstand zwischen dem Stellglied 8 mit den an ihm befestigten Ringdichtungen 48, 50 und den Sitzflächen 36, 38 des Rohrleitungssystems 2 derart ausgelegt ist, dass eine Verformung, die die Grenzen der Elastizität der Ringdichtungen 48 und 50 überschreitet und somit eine dauerhafte Verformung mit einhergehender Rissbildung und dergleichen bewirken könnte, nicht erreicht wird.

In einer hier nicht dargestellten Abwandlung könnten unter Beibehaltung der oben erläuterten Grundprinzipien die Ringdichtungen 48, 50 auch an den Sitzflächen 36, 38 anstatt am Stellglied 8 befestigt sein.

### Bezugszeichenliste

- 1: Absperrarmatur
- 2: Rohrleitungssystem
- 3: Durchflussrichtung
- 4: Schiebergehäuse
- 6: Absperrelement
- 8: Stellglied
- 10: Schieberdom
- 12: Gehäusedeckel
- 14: Schraube
- 15: Halteelement
- 16: Deckelflansch
- 18: Gehäuseflansch
- 20: Deckeldichtung
- 22: Durchbohrung
- 24: Stopfbuchspackung
- 26: Spindel
- 28: Aufnahme
- 30: Bundring
- 34a, 34b: Führungselement
- 35: Keilspitze
- 36, 38: Sitzfläche
- 44, 46: Keilfläche
- 48, 50: Dichtelement (Ringdichtung)
- 52: Schließrichtung
- 54, 56: Ringspalt

## Patentansprüche

1. Absperrarmatur (1) für ein Rohrleitungssystem (2) mit einem beidseits mit Rohranschlüssen versehenen Schiebergehäuse (4) und mit einem Absperrelement (6), das senkrecht zur Rohrleitungsachse (A) in eine Schließstellung einschiebbar ist, wobei das Absperrelement (6) ein Stellglied (8) und eine Anzahl von elastischen Dichtelementen (48, 50) umfasst, und wobei die Rohranschlüsse mit Sitzflächen (36, 38) für das Absperrelement (6) versehen sind, wobei der in der Schileßstellung erzielte Abstand zwischen dem Stellglied (8) und den Sitzflächen (36, 38) derart ausgelegt ist, dass eine Verformung der Dichtelemente (48, 50), die deren Grenzen der Elastizität überschreitet, ausgeschlossen ist, und wobei die Dichtelemente (48, 50) des Absperrelementes (6) jeweils als Ringdichtung ausgebildet sind, **dadurch gekennzeichnet, dass** mindestens eine der am Stellglied (8) angeordneten Ringdichtungen (48, 50) auf ihrer der Sitzfläche (36, 38) der Rohrleitung zugewandten Seite einen kleineren Durchmesser als auf ihrer dem Stellglied (8) zugewandten Seite aufweist.

2. Absperrarmatur (1) nach Anspruch 1, wobei jede der beiden am Stellglied (8) angeordneten Ringdichtungen (48, 50) auf ihrer der Sitzfläche (36, 38) der Rohrleitung zugewandten Seite einen kleineren Durchmesser als auf ihrer dem Stellglied (8) zugewandten Seite aufweist

3. Absperrarmatur (1) nach Anspruch 1, die für eine bevorzugte Flussrichtung (6) eines das Rohrleitungssystem (2) durchströmenden Mediums ausgelegt ist, wobei die auf der stromaufwärtigen Seite des Stellgliedes (8) angeordnete Ringdichtung (50) auf ihrer der Sitzfläche (38) zugewandten Seite einen kleineren Durchmesser aufweist als auf ihrer dem Stellglied (8) zugewandten Seite, und wobei die auf der stromabwärtigen Seite des Stellgliedes (8) angeordnete Ringdichtung (48) auf ihrer der Sitzfläche (36) zugewandten Seite einen größeren Durchmesser aufweist als auf ihrer dem Stellglied (8) zugewandten Seite.

4. Absperrarmatur (1) nach einem der Ansprüche 1 bis 3, wobei das Stellglied (8) keilförmig ausgebildet ist.

5. Absperrarmatur (1) nach einem der Ansprüche 1 bis 4, deren Stellglied (8) mindestens ein Führungselemente (34a) aufweist, dem ein mit dem Schiebergehäuse (4) verbundenes komplementäres Führungselement (34b) zugeordnet ist, wobei die Führungselemente (34a, 34b) derart beschaffen sind, dass eine Verkippung oder eine Verschiebung des Stellgliedes (8) in Richtung der Rohrleitungsachse (A) verhindert ist.

6. Absperrarmatur (1) nach Anspruch 5, deren Führungselemente (34a, 34b) derart ausgelegt sind, dass auf das Absperrelement (6) einwirkende Kräfte in Richtung der Rohrleitungsachse (A) über die Führungselemente (34a, 34b) in das Schiebergehäuse (4) abgetragen werden.

7. Absperrarmatur (1) nach Anspruch 5 oder 6, wobei die Führungselemente (34a, 34b) des Schiebergehäuses (4) eine Anzahl von Leisten oder Stangen und die die Führungselemente (34a, 34b) des Stellgliedes (8) eine Anzahl von zugehörigen Ausnehmungen oder Nuten aufweisen.

8. Absperrarmatur (1) nach einem der Ansprüche 1 bis 7, wobei der Hubweg des Absperrelementes (6) in Schließrichtung (52) durch einen Festanschlag derart begrenzt ist, dass eine inelastische Zusammenpressung der Dichtelemente (48, 50) beim Kontakt mit den zugehörigen Sitzflächen (36, 38) ausgeschlossen ist.

## Claims

1. A shutoff device (1) for a pipeline system (2), having a valve housing (4) provided on both sides with pipe connectors and having a shutoff element (6) which can be pushed, in a direction normal to the pipeline axis (A), into a closed position, wherein the shutoff element (6) comprises a valve (8) and a number of elastic sealing elements (48, 50) and wherein the pipe connectors are provided with seatings (36, 38) for the shutoff element (6), wherein the distance between the valve (8) and the seatings (36, 38) achieved in the closed position is sized such that a deformation of the sealing elements (48, 50) exceeding the latter's limits of elasticity is excluded and wherein each of the sealing elements (48, 50) of the shutoff element (6) is designed as an O-ring seal, **characterized in that** at least one of the O-ring seals (48, 50) arranged on the valve (8) has on its side facing towards the seating (36, 38) of the pipeline a smaller diameter than on its side facing towards the valve (8).

2. The shutoff device (1) of claim 1, wherein each of the two O-ring seals (48, 50) arranged on the valve (8) has on its side facing towards the seating (36, 38) of the pipeline a smaller diameter than on its side facing towards the valve (8).

3. The shutoff device (1) of claim 1, designed for a preferred flow direction (6) of a medium flowing through the pipeline system (2), wherein the O-ring seal (50) arranged on the upstream side of the valve (8) has on its side facing towards the seating (38) a smaller diameter than on its side facing towards the valve (8) and wherein the O-ring seal (48) arranged on the downstream side of the valve (8) has on its side facing towards the seating (36) a larger diameter than on its side facing towards the valve (8).

4. The shutoff device (1) of any of claims 1 to 3, wherein the valve (8) is designed in the shape of a wedge.

5. The shutoff device (1) of any of claims 1 to 4, whose valve (8) includes at least one guide element (34a) with which a complementary guide element (34b) connected with the valve housing (4) is associated, wherein the guide elements (34a, 34b) are designed such that a canting or shifting of the valve (8) in the direction of the pipeline axis (A) is prevented.

6. The shutoff device (1) of claim 5, whose guide elements (34a, 34b) are designed such that forces acting upon the shutoff element (6) are carried off via the guide elements (34a, 34b) in the direction of the pipeline axis (A) into the valve housing (4).

7. The shutoff device (1) of claim 5 or 6, wherein the guide elements (34a, 34b) of the valve housing (4) include a number of ledges or rods and the guide elements (34a, 34b) of the valve (8) include a number of matching recesses or grooves.

8. The shutoff device (1) of any of claims 1 to 4, wherein the stroke distance of the shutoff element (6) in closing direction (52) is limited by a fixed stop in such a way that an inelastic compression of the sealing elements (48, 50) upon contact with the associated seatings (36, 38) is excluded.

## Revendications

1. Dispositif de fermeture (1) pour un système de conduite (2), ayant un boîtier de vanne (4) pourvu des deux côtés de raccords de conduite et ayant un élément de fermeture (6) qui peut être poussé, dans une direction perpendiculaire à l'axe de la conduite (A), dans une position fermée, dans lequel l'élément de fermeture (6) comprend une vanne (8) et un nombre d'éléments d'étanchéité (48, 50) élastiques et dans lequel les raccords de conduite sont pourvus de surfaces d'appui (36, 38) pour l'élément de fermeture (6), dans lequel la distance entre la vanne (8) et les surfaces d'appui (36, 38) atteinte dans la position fermée est dimensionnée de façon à ce qu'une déformation des éléments d'étanchéité (48, 50) excédant les limites d'élasticité de ces derniers est exclue et dans lequel chacun des éléments d'étanchéité (48, 50) de l'élément de fermeture (6) est prévu comme anneau torique d'étanchéité, **caractérisé en ce qu'**au moins un des anneaux toriques d'étanchéité (48, 50) disposés sur la vanne (8) a, de son côté en regard de la surface d'appui (36, 38) de la conduite, un diamètre plus petit que de son côté en regard de la vanne (8).

2. Dispositif de fermeture (1) selon la revendication 1, dans lequel chacun des deux anneaux toriques d'étanchéité (48, 50) disposés sur la vanne (8) a, de son côté en regard de la surface d'appui (36, 38) de la conduite, un diamètre plus petit que de son côté en regard de la vanne. (8).

3. Dispositif de fermeture (1) selon la revendication 1, pourvu pour une direction d'écoulement (6) préférée d'un milieu coulant à travers le système de conduite (2), dans lequel l'anneau torique d'étanchéité (50) disposé du côté en amont de la vanne (8) a, de son côté en regard de la surface d'appui (38), un diamètre plus petit que de son côté en regard de la vanne (8) et dans lequel l'anneau torique d'étanchéité (48) disposé du côté en aval de la vanne (8) a, de son côté en regard de la surface d'appui (36), un diamètre plus grand que de son côté en regard de la vanne (8).

4. Dispositif de fermeture (1) selon l'une quelconque des revendications 1 à 3, dans lequel la vanne (8) est étudiée en forme de clavette.

5. Dispositif de fermeture (1) selon l'une quelconque des revendications 1 à 4, dont la vanne (8) comprend au moins un élément de guidage (34a) auquel un élément de guidage (34b) complémentaire, relié avec le boîtier de vanne (4), est affecté, dans lequel les éléments de guidage (34a, 34b) son conçus de manière qu'un basculement ou un déplacement de la vanne (8) dans la direction de l'axe de la conduite (A) est empêché.

6. Dispositif de fermeture (1) selon la revendication 5, dont les éléments de guidage (34a, 34b) son conçus de manière que des forces agissant sur l'élément de fermeture (6) sont dissipées au moyen des éléments de guidage (34a, 34b) dans la direction de l'axe de la conduite (A) vers le boîtier de vanne (4).

7. Dispositif de fermeture (1) selon la revendication 5 or 6, dans lequel les éléments de guidage (34a, 34b) du boîtier de vanne (4) comprennent un nombre de listels ou de barres et les éléments de guidage (34a, 34b) de la vanne (8) comprennent un nombre de creux ou de rainures y appartenant.

8. Dispositif de fermeture (1) selon l'une quelconque des revendications 1 à 4, dans lequel le chemin de la course de l'élément de fermeture (6) dans la direction de fermeture (52) est limité par une butée fixe, de façon à ce qu'une compression inélastique des éléments d'étanchéité (48, 50) lors du contact avec les surfaces d'appui (36, 38) y appartenant est exclue.
